Europäisches Patentamt

European Patent Office

Office européen des brevets

(11) Publication number: **0 426 158 A2**

## EUROPEAN PATENT APPLICATION

(21) Application number: 90120916.3

(22) Date of filing: 31.10.90

(51) Int. Cl.⁵: **D06N 7/00**, D06N 3/04, C08J 5/04

(30) Priority: 03.11.89 US 431193

(43) Date of publication of application:
08.05.91 Bulletin 91/19

(84) Designated Contracting States:
AT BE CH DE ES FR GB IT LI NL

(71) Applicant: **PHILLIPS PETROLEUM COMPANY**
5th and Keeler
Bartlesville Oklahoma 74004(US)

(72) Inventor: **Stirling, John Andrew**
2160 Mountain Drive
Bartlesville,OK 74003(US)

(74) Representative: **Geissler, Bernhard, Dr. jur.,**
Dipl.-Phys. Patent- und Rechtsanwälte et al
Bardehle-Pagenberg-Dost-
Altenburg-Frohwitter-Geissler & Partner
Postfach 86 06 20
W-8000 München 86(DE)

(54) Unidirectionally fiber reinforced thermoplastic composites and method of manufacture.

(57) A unidirectionally fiber reinforced thermoplastic composite. The composite may be in the form of a fabric having fibrous reinforcing material extending unidirectionally with a fibrous thermoplastic material extending substantially perpendicularly to the fibrous reinforcing material. The thermoplastic material is preferably of a type which is isotropic in the melt phase. One preferred fabric is made with floating yarns containing reinforcing fibers and yarns containing thermoplastic fibers extending substantially perpendicularly to the reinforcing fibers. A reinforced composite laminate is also disclosed using multiple layers of the fabric heated to melt the thermoplastic material. Methods of producing the fabric and laminate are also disclosed.

FIG. 1

# UNIDIRECTIONALLY FIBER REINFORCED THERMOPLASTIC COMPOSITES AND METHOD OF MANUFAC- TURE

## Background Of The Invention

### 1. Field Of The Invention

This invention relates to fiber reinforced thermoplastic composite materials, and more particularly, to a woven material having reinforcing yarn in the warp or the woof and thermoplastic yarn used in the other direction. The invention also relates to laminates formed by fusing multiple layers of such woven material.

### 2. Description Of The Prior Art

A number of woven materials and laminates using reinforcing yarn and thermoplastic yarn are known in the art. U. S. Patent No. 4,407,885 to Murphy et al. discloses a composite article woven with plastic and reinforcement in one direction and additional reinforcement perpendicular thereto. The plastic may also run in both directions. A laminate may be formed of individual plies arranged so that the warps of each layer are arranged in the same direction or perpendicular to the preceding layer or at any other desired angle or sequence.

U. S. Patent No. 4,479,999 to Buckley et al. discloses a woven fabric with infusible fibers in the warp and fusible fibers in the weft. These directions may be reversed or mixed. A laminate may be formed by stacking several layers of the woven fabric and applying heat and pressure thereto. This patent does not disclose polyarylene sulfide fibers nor fibers that are isotropic in the melt phase. In fact, this patent teaches away from such materials and discusses the ability of the polymers used in the patent to form an anisotropic melt phase.

The present invention provides a new and non-obvious woven material, namely one which has unidirectional reinforcement yarn woven with thermoplastic filament yarn made of a thermoplastic which is isotropic in the melt phase such as polyarylene sulfide fibers.

## Summary Of The Invention

The unidirectionally fiber reinforced thermoplastic composite of the present invention may be characterized in one embodiment as a composite fabric comprising a fibrous reinforcing material extending unidirectionally and a fibrous thermoplastic material extending substantially perpendicularly to the fibrous reinforcing material. The thermoplastic material is of a type which is isotropic in the melt phase, such as a polyarylene sulfide material. The preferred material in this group is polyphenylene sulfide, but the invention is not intended to be limited to this particular material.

In one preferred embodiment, the reinforcing material alone runs in a first direction, and the thermoplastic material is in a second, perpendicular direction. However, thermoplastic filament yarn may be commingled with the reinforcing material in the first direction.

The present invention may also be characterized as a woven fabric having floating yarns containing fibers selected from a group comprising carbon fibers, glass fibers and aramid fibers. The floating yarns are unidirectional, and the fabric further comprises yarns containing thermoplastic fibers extending substantially perpendicularly to the reinforcing fibers. The fabric may be characterized as one of a group comprising satin fabric and sateen fabric. In one preferred satin fabric, the floating yarns are warp yarns which float over at least four fill yarns. The warp yarns are low twist yarns having a twist rate of less than about one twist per inch.

The present invention also includes a reinforced composite laminate comprising a plurality of layers of woven composite prepregs, each of the composite prepregs being formed by weaving a unidirectional fibrous reinforcing material with a thermoplastic material extending substantially perpendicular to the fibrous material and heating the fabric to melt the thermoplastic material. Preferably, the direction of the unidirectional reinforcing material in one layer is substantially perpendicular to the direction of the reinforcing material in an adjacent layer.

It is an important object of the present invention to provide a composite fabric having a unidirectional fibrous reinforcing material.

Another object of the invention is to provide a composite fabric having unidirectional fibrous reinforcing material with a fibrous thermoplastic material extending substantially perpendicular thereto wherein the thermoplastic material is isotropic in the melt phase.

An additional object of the invention is to provide a method of making fibrous reinforced composite fabrics.

A further object of the invention is to provide a reinforcing composite laminate comprising a plurality of layers of unidirectionally reinforced fabric which are heated to melt thermoplastic material therein.

Additional objects and advantages of the invention will become apparent as the following detailed description of the preferred embodiments is read in conjunction with the drawings which illustrate such preferred embodiment.

Brief Description Of The Drawings

FIG. 1 shows a view of one side of the unidirectional fiber reinforced thermoplastic composite of the present invention, specifically illustrating a five-harness weave.

FIG. 2 shows the reverse side of the composite shown in FIG. 1.

FIG. 3 illustrates how two layers of the composite of FIGS. 1 and 2 may be positioned to form a laminate.

Description Of The Preferred Embodiment

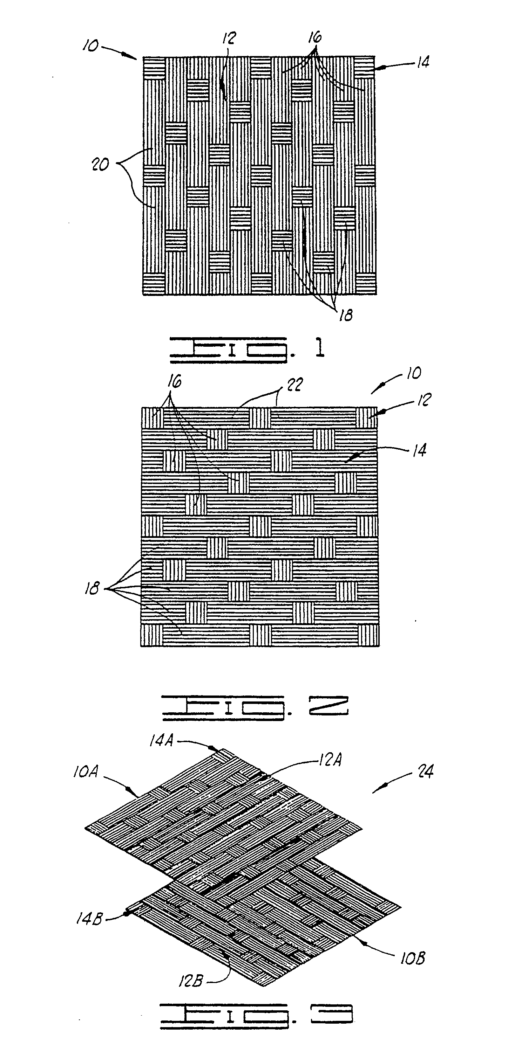

Referring now to the drawings, and particularly to FIGS. 1 and 2, one embodiment of the unidirectionally fiber reinforced thermoplastic composite of the present invention is shown and generally designated by the numeral 10. In this embodiment, a weave of the kind generally referred to as a five-harness weave is used. That is, the threads in the warp pass under every fifth thread in the weft. The threads in the warp thus pass or "float" over the four weft threads in between. The number of threads in one direction necessary to make a basic unit of the weave is referred to as the repeat. In this case, there are five threads in the repeat. The five-harness weave is an example of the general type referred to as satin or sateen weaves which are defined as those in which the warp yarns are floated over the weft yarns or the weft over the warp and are interlaced at widely spread regular or irregular intervals, thereby forming a substantially smooth, compact, unbroken surface.

In FIGS. 1 and 2, the warp is shown in the vertical direction, and the weft is shown in the horizontal direction. In the preferred embodiment, reinforcing yarn 12 is used in the warp, and thermoplastic yarn 14 is used in the weft. In the five-harness weave embodiment shown in the drawings, reinforcing material 12 comprises a plurality of parallel yarn elements 16 which pass under portions of every fifth, substantially parallel thermoplastic yarn element 18. As seen in FIG. 1, the floaters 20 of reinforcing yarn elements 16 are staggered such that the exposed portions of thermoplastic yarn elements 18 appear in the pattern shown. Of course, other weave patterns could also be used, and the invention is not intended to be limited to the specific five-harness satin weave illustrated.

Referring to FIG. 2 which shows the opposite side of composite 10, the pattern is substantially reversed from the side shown in FIG. 1. That is, in FIG. 2, thermoplastic yarn elements 18 have floaters 22 which are staggered to show the pattern of exposed portions of reinforcing yarn elements 16.

It will be seen by those skilled in the art that the side shown in FIG. 1 may be referred to as the reinforcement side because most of the fibers exposed are reinforcing yarn elements 16, and the side shown in FIG. 2 may be referred to as the resin-rich side of composite 10 because most of the exposed area includes floaters 22 of thermoplastic yarn elements 18.

Reinforcing yarn 12 may be made from typical fibrous reinforcing materials such as carbon fibers, glass fibers or aramid fibers. In one embodiment, the floating reinforcing yarns are carbon fibers and have a length in the range of about three to about thirty millimeters. On one preferred embodiment, the length of the yarn is about five to about twenty millimeters.

In a preferred embodiment, the floating reinforcing yarns are warp yarns in the form of low twist yarns having a twist rate of less than about one twist per inch. However, no-twist yarns or yarns with other twist rates are also acceptable.

Reinforcing yarn 12 may be made solely from the reinforcing materials, or the reinforcing materials may be commingled or intimately admixed with the same thermoplastic resin used in thermoplastic yarn 14. In all cases, the reinforcing material is used only unidirectionally, in either the warp or the weft.

Thermoplastic yarn 14 is preferably made from a meltable thermoplastic material of the type which is isotropic in the melt phase. Such materials include the group comprising polyarylene sulfide, polyetheretherketone, polyethersulfone, polysulfone oxide, polycarbonate, polyamide and polypropylene. The preferred member of this group is polyarylene sulfide, and more particularly, polyphenylene sulfide. The preferred polyphenylene sulfide has a specific gravity in the range of about 1.31 to about 1.37, a molecular weight in the range of about 50,000 to about 300,000, and a melt flow rate in the range of about 10 to about 200 g/10 min.

The fabric may be used in a process to fabricate a prepreg. The process preferably comprises the steps of providing first yarns containing thermoplastic fibers and second yarns containing reinforcing fibers in the form of a satin or sateen weave fabric having floating yarns, heating the fabric to a temperature sufficient to soften the resin, and compressing a softened resin rich surface of the fabric against a mold surface sufficiently to conform and consolidate the resin into a thermoplastic continuous matrix containing the fiber reinforcement. The fabric is preferably heated to a temperature in the range of about 550° F. to about 700° F. and is pressed against the mold surface at a pressure in the range of about ten pounds per square inch to about 10,000 pounds per square inch. In one preferred embodiment using floating yarns in the range of about three to about thirty millimeters and polyphenylene sulfide as the thermoplastic, the fabric is heated to a temperature in the range of about 575° F. to about 620° F. In this embodiment, the fabric is pressed against the mold surface at a pressure in the range of about 25 pounds per square inch to about 1,000 pounds per square inch.

The fabric may be contacted with the mold surface by being draped thereon.

The process may further comprise forming folds in the fabric to form a folded sheet and contacting the folded sheet by at least one pair of mold surfaces having a passage defined therebetween by pulling the folded sheet generally longitudinally with respect to the folds in the sheet between at least the one pair of the mold surfaces to consolidate the resin in a continuously thermoplastic matrix containing substantially unidirectionally aligned fiber reinforcement and to conform the shape of the consolidated resin and fiber to a shape of the passage defined between the pair of mold surfaces.

In the process, the fabric may be in the form of a ribbon with the ribbon contacted by a pair of mold surfaces by being passed therebetween. The thermoplastic resin is formed and sufficiently consolidated between the mold surfaces to provide prepreg tape having substantially unidirectional fiber reinforcement in a continuous thermoplastic matrix.

A description of a molded prepreg panel fabricated by this process follows.

## Example

A molded prepreg panel of a fabric according to the present invention was made from continuous multifilament tows of carbon fibers and polyphenylene sulfide fibers. The tows were not commingled. The fabric was constructed with 60% by weight carbon fiber tows in the warp and 40% by weight polyphenylene sulfide tows in the fill or weft. The prepreg panel that was molded from this cloth was laid up as follows with respect to the carbon fibers: (0, 90, 0, 90, 90, 0, 90, 0). The panel was molded in a heated platen press using pressures, temperatures and dwell times typical of those used in molding other polyphenylene sulf ide prepreg composites of similar thickness. Table I presents mechanical properties of the panel molded from the fabric of the present invention compared with those of a molded panel made from standard woven carbon fiber prepreg cloth also containing 60% by weight of carbon.

4

TABLE I

| Mechanical Property | Material | |
|---|---|---|
| | Fabric Panel of Present Invention | Standard AC30-60 Woven Carbon Fiber Prepreg |
| Tensile Strength, psi | 76,000 longitudinal 99,900 transverse | 92,000 |
| Tensile Modulus, psi | 8,600,000 longitudinal 8,900,000 transverse | 8,500,000 |
| Flex Strength, psi | 113,600 longitudinal | 95,000 |
| Flex Modulus, psi | 10,650,000 longitudinal | 7,900,000 |
| Compressive Strength, psi | 35,500 longitudinal | 53,000 |
| Compressive Modulus, psi | 7,980,000 longitudinal | 9,200,000 |

The fabric prepreg of the present invention has many advantages. First of all, the unidirectional reinforced fabric is highly drapable for thermoforming and is easily laid up on tools with complex curvatures for autoclave consolidation. Also, the fabric is flexible enough for direct pultrusion of various cross-sectional shapes. Further, the fabric is produced without energy-intensive wetting and drying of the reinforcing fibers and without the necessity of passing them through a heating cycle as they are drawn through a die to produce a tape.

The fabric of the present invention is also particularly well adapted for use in the production of laminates. Referring now to FIG. 3, an exploded view of a laminate is shown and generally designated by the numeral 24 having two layers of composite fabric 10A and 10B. Of course, more than two layers may be used. The sides of composites 10A and 10B shown in FIG. 3 correspond to the side shown in FIG. 1. That is, the sides visible in FIG. 3 are the reinforced side. Obviously, the resin-rich side of fabric composite 10A is positioned adjacent to the reinforced side of fabric composite 10B. This is a preferred embodiment, but the invention is not intended to be limited to this particular molding technique.

As also seen in FIG. 3, reinforcing yarn 12A and thermoplastic yarn 14A in composite 10A are oriented perpendicular to the corresponding reinforcing yarn 12B and thermoplastic yarn 14B in composite 10B.

Once the plurality of composite layers, such as 10A and 10B are positioned adjacent to one another, heat and pressure may be applied to form the laminate 24. As will be seen by those skilled in the art, with the embodiment of FIG. 3, the resin-rich side of composite 10A will be molded into the reinforced side of composite 10B. Further, because of the perpendicular orientation of composites 10A and 10B, reinforcing yarn 12 will run in both directions in laminate 24, thus providing a well reinforced and strong laminated article.

The satin or sateen weaves, such as the five-harness weave illustrated, thus provide relatively large areas of thermoplastic material on the resin-rich side of one composite layer to be molded into the relatively large area of reinforcing material on the reinforcing side of the adjacent composite layer.

Using the process to form the prepreg previously described herein, the laminate may be formed wherein the process further comprises forming a layup of a plurality of fabrics, one of the fabrics having its resin rich side against the mold surface and the other of the fabrics being stacked resin rich side against reinforcement rich side as shown in FIG. 3, heating the layup sufficiently to soften the resin therein, and pressing the fabrics together sufficiently to consolidate the resin and provide a laminate of layers of reinforcing fibers in a substantially continuous thermoplastic matrix.

Thus, the unidirectional fiber reinforced thermoplastic composite prepreg of the present invention and the method of production therefor, along with the laminate formed from such prepreg, of the present invention are well adapted to provide the ends and advantages mentioned as well as those inherent therein. While a presently preferred embodiment of the invention has been shown for the purposes of this disclosure, numerous changes in the arrangement and construction of the components may be made by those skilled in the art. In particular, but not by way of limitation, different weave patterns and orientation of laminate layers may be used. All such changes are encompassed within the scope and spirit of the appended claims.

**Claims**

1. A composite fabric comprising:
a fibrous reinforcing material extending unidirectionally; and
a fibrous thermoplastic material extending substantially perpendicularly to said fibrous reinforcing material, said thermoplastic material being of a type which is isotropic in the melt phase.

2. The fabric of claim 1 wherein said thermoplastic material is polyarylene sulfide, in particular wherein said thermoplastic material is polyphenylene sulfide.

3. The fabric of claim 2 wherein said polyphenylene sulfide has the following properties:
a specific gravity in the range of about 1.31 to about 1.37;
a molecular weight in the range of about 50,000 to about 300,000; and
a melt flow rate in the range of about 10 to about 200g/10 min.

4. The fabric of one of the preceding claims wherein said fibrous reinforcing material is one of a group comprising carbon, glass and aramid fibers.

5. The fabric of one of the preceding claims comprising:
approximately 60% by weight carbon fiber tows as the reinforcing material in the warp of said fabric; and
approximately 40% by weight of polyphenylene sulfide fiber tows as the thermoplastic material in the fill of said fabric.

6. The fabric of claim 4 wherein said reinforcing material is commingled with a thermoplastic filament yarn.

7. The fabric of one of the preceding claims wherein said reinforcing material is a floating yarn, in particular wherein said fabric has a five-harness weave.

8. The fabric if one of the preceding claims wherein said fabric is used in a prepreg formed by heating said fabric to melt said thermoplastic material.

9. A woven fabric comprising floating yarns containing reinforcing fibers selected from a group comprising carbon fibers, glass fibers and aramid fibers.

10. The fabric of claim 9 wherein:
said floating yarns are unidirectional; and said fabric further comprises yarns containing thermoplastic fibers extending substantially perpendicularly to said reinforcing fibers.

11. The fabric of claim 10 which is characterized as one of a group comprising satin fabric and sateen fabric, in particular is a satin fabric, wherein said floating yarns are warp yarns which float over at least four of filling yarns.

12. The fabric of claim 11 wherein said warp yarns are low twist yarns having a twist rate of less than about one twist per inch, or wherein said warp yarns are no twist yarns.

13. The fabric of claim 11 or 12 wherein said warp yarns further comprise filaments of meltable thermoplastic resin intimately admixed with said reinforcing fibers.

14. The fabric of one of the claims 9 - 13 wherein said meltable thermoplastic resin is selected from one of a group comprising polyarylene sulfide, polyetheretherketone, polyethersulfone, polysulfone oxide, polycarbonate, polyamide and polypropylene.

15. The fabric of claim 9 wherein said reinforcing fibers in said floating yarns comprise continuous carbon fibers and said fabric further comprises filling yarns comprising filaments of a meltable thermoplastic resin, in particular wherein said floating yarns have a length in the range of about three to about thirty millimeters, more particularly wherein said floating yarns have a length in the range of about five to about twenty millimeters.

16. The fabric of claim 15 wherein said filaments in said filling yarns consist essentially of said thermoplastic resin.

17. A process for fabricating a prepreg comprising the steps of:
providing first yarns containing thermoplastic fibers and second yarns containing reinforcing fibers in the form of a satin or sateen weave fabric having floating yarns, said fabric having a resin-rich side wherein said floating yarns are formed from said first yarns and a reinforcement-rich side wherein said floating yarns are formed from said second yarns;
heating said fabric to a temperature sufficient to soften said resin; and
pressing the softened resin-rich surface of said fabric against a mold surface under sufficient conditions to conform and consolidate said resin into a thermoplastic continuous matrix containing said fiber reinforcement, in particular wherein said fabric is contacted with said mold surface by being draped thereon.

18. The process of claim 17 wherein said fabric comprises a satin weave fabric having warp yarns and filling yarns with continuous carbon fibers in said warp yarns, in particular wherein said thermoplastic fibers are selected from one of a group comprising polyarylene sulfide, polyetheretherketone, polyethersulfone, polysulfone oxide, polycarbonate, polyamide, and polypropylene.

19. The process of claim 17 or 18 wherein said sufficient conditions comprise heating said fabric to a temperature in the range of about 550°F to about 700°F and pressing against said mold surface at a pressure in the range of about 10 psi to about 10,000 psi.

20. The process of claim 17 wherein:

said floating yarns have a length in the range of about three to about thirty millimeters;

said thermoplastic fibers are formed from polyphenylene sulfide;

said fabric is heated to a temperature in the range of about 575° F to about 620° F; and

said fabric is pressed against said mold surface at a pressure in the range of about 25 psi to about 1000 psi.

21. The process of claim 17 further comprising:

forming a layup of a plurality of fabrics, with one of said fabrics having its resin-rich side against said mold surface and the other of said fabrics being stacked resin-rich side against reinforcement-rich side;

heating said layup sufficiently to soften the resin therein; and

pressing said fabrics together sufficiently to consolidate said resin and provide a laminate of layers of reinforcing fibers in a substantially continuous thermoplastic matrix.

22. The process of one of the claims 17 to 21 wherein:

said fabric is in the form of a ribbon and is contacted by a pair of mold surfaces by being passed therebetween; and

said thermoplastic resin is formed and sufficiently consolidated between said mold surfaces to provide a prepreg tape having substantially unidirectional fiber reinforcement in a continuous thermoplastic matrix.

23. The process of claim 17 further comprising:

forming folds in said fabric to form a folded sheet; and

contacting said folded sheet by at least one pair of mold surfaces having a passage defined therebetween by pulling said folded sheet generally longitudinally with respect to said folds in said sheet between at least said one pair of said mold surfaces to consolidate said resin in a continuously thermoplastic matrix containing substantially unidirectionally aligned fiber reinforcement and to conform the shape of the consolidated resin and fiber to a shape of a passage defined between said pair of mold surfaces.

24. A reinforced composite laminate comprising:

a plurality of layers of woven composite prepreg, each of said composite prepegs being formed from a fabric obtained by weaving a unidirectional fibrous reinforcing material with a thermoplastic material extending substantially perpendicular to said fibrous material, and heating said fabric to melt said thermoplastic material;

wherein, the direction of said unidirectional reinforcing material in one layer is substantially perpendicular to the direction of said reinforcing material in an adjacent layer.

25. The laminate of claim 24 wherein said fabric is the fabric of one of the claims 1 to 16.

FIG. 1

FIG. 2

FIG. 3